# EUROPÄISCHE PATENTANMELDUNG

(11) **EP 0 989 000 A2**
(43) Veröffentlichungstag der Anmeldung: **29.03.2000**
(21) Anmeldenummer: 99118537.2
(22) Anmeldetag: 20.09.1999
(51) Int. Cl.: B60C 19/00, B60C 11/117

(54) **Luftreifen mit schallabsorbierenden Eigenschaften**

(30) Priorität: 24.09.1998 DE 19843755; 19.01.1999 DE 19901820
(71) Anmelder: Continental Aktiengesellschaft, 30165 Hannover (DE)
(72) Erfinder: Gauterin, Frank, Dr., 31535 Neustadt/Rbge (DE); Huinink, Heinrich, 30823 Garbsen (DE); Knauf, Werner, 31535 Wunstorf (DE); Schürmann, Oliver, Dr., 30855 Langenhagen (DE); Veit, Ivar, Dr., 64569 Nauheim (DE)

(57) **Zusammenfassung**

Luftreifen für ein Fahrzeug, wobei der Reifenkörper im wesentlichen aus zwei Seitenwänden, einer mit Karkassenlagen und ggf. mit Verstärkungselementen versehene Karkasse, einem aus Gürtellagen und ggf. einer ein- oder mehrteiligen Gürtelbandage, einem mit einem Laufstreifenprofil versehenen Laufstreifen und weiteren Einlagen bestehenden Gürtelpaket, sowie aus zwei mit Wulstkernen versehenen Reifenwülsten besteht, wobei mindestens innerhalb von Teilbereichen des Reifenkörpers eine Vielzahl von Hohlraum-Resonatoren angeordnet ist, die mit einer Öffnung in der Oberfläche des Luftreifens in Verbindung stehen.

## Beschreibung

Die Erfindung betrifft einen Luftreifen für ein Fahrzeug, wobei der Reifenkörper im wesentlichen aus zwei Seitenwänden, einer mit Karkassenlagen und ggf. mit Verstärkungselementen versehenen Karkasse, einem aus Gürtellagen und ggf. einer ein- oder mehrteiligen Gürtelbandage, einem mit einem Laufstreifenprofil versehenen Laufstreifen und weiteren Einlagen bestehenden Gürtelpaket, sowie aus zwei mit Wulstkernen versehenen Reifenwülsten besteht. Ebenfalls werden für die Herstellung eines erfindungsgemäßen Luftreifens besonders geeignete Verfahren sowie eine Verwendung des Luftreifens bekanntgemacht.

Die Schallabstrahlung eines Kraftfahrzeugreifens trägt neben Wind- und Motorgeräuschen relativ stark zur gesamten Geräuschemission eines Fahrzeuges bei. Eine der Ursachen ist hierbei das Abrollgeräusch, welches durch das Auftreffen des Profiles der Reifenlauffläche auf die Fahrbahnoberfläche entsteht, wobei die Gestaltung des Reifenprofils einen wesentlichen Einfluß hierauf nimmt. Hier sind bereits vielerlei Maßnahmen bekannt, die durch Änderungen der Pitchfolgen eine Lärmreduzierung im Hinblick auf die im hörbaren Bereich unangenehmen Frequenzen erzielten, indem eine Verteilung auf ein breiteres Frequenzband und eine Vermeidung der sogenannten 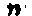 Peaks" erreicht wurde. Die Schwierigkeiten, die sich hierbei genauso wie bei dem Einsatz lärmmindernder Gummimischungen ergaben, liegen in dem besonderen Einfluß, den Laufstreifenprofil und auch Gummimischung auf die Fahreigenschaften des Fahrzeuges besitzen.

Weitere Entwicklungen gehen dahin, den beim Fahren bzw. Rollen der Reifen entstehenden Schall möglichst in unmittelbarer Nähe des Entstehungsbereiches zu absorbieren, indem beispielsweise in den Radkästen der Kraftfahrzeuge schallabsorbierende Vorrichtungen angebracht werden. Auch hier sind der zusätzliche Aufwand und die Veränderungen an der Karosserie als nachteilig zu bemerken.

Eine weitere Schallursache sind die Schwingungen des Laufstreifens und der Seitenwände eines sich drehenden Fahrzeugreifens, die beim Verlassen der Radaufstandsfläche in ihren Eigenschwingungsformen ausschwingen. Auch die Eigenschwingungsformen des Gürtels machen sich hier verstärkt bemerkbar. Hier sind bereits Maßnahmen zur Versteifung der Seitenwände bzw. zur Verbindung beider Seitenwände innerhalb des Luftreifens mit Stegen bekannt, was jedoch das Gewicht des Reifens erhöht und den Abrollkomfort beeinträchtigt.

All diese Schwingungen übertragen sich auch auf die Luftsäule im Reifeninneren, die diese wiederum zu einem nicht geringen Teil weiterleitet oder durch die Ausbildung von stehenden Wellen und das Anregen bestimmter Eigenfrequenzen noch verstärkt und in die Reifenbauteile und damit wieder in das den Reifen umgebende Luftvolumen rückkoppelt.

Die DE 41 20 878 C2 zeigt hierzu einen Fahrzeugreifen mit Versteifungen im Inneren, die die gegenüberliegenden Seitenwände kraftschlüssig verbinden, wobei die Versteifungen an den Innenseiten der Seitenwände über ringförmige Bänder anvulkanisiert sind. Durch eine solche Anordnung sollen die Schwingungen der Seitenwände und auch ihre Übertragung auf die Luftsäule im Inneren des Reifens gedämpft werden. Die im wesentlichen in Radialrichtung und auch in ihrer Form gleichmäßig gestalteten Versteifungen bilden durch ihre homogene und gleichförmig am Umfang angeordnete Ausbildung jedoch selbst wieder eine schwingungsfähige Struktur, die zwar dämpfend wirkt, jedoch ebenfalls Eigenschwingungen ausbilden kann. Zudem werden lediglich die Seitenwandschwingungen beeinflußt, nicht die Schwingungen des Laufstreifens und des Gürtels sowie deren Übertragung auf das umgebende Luftvolumen.

Die ER 737 597 A1 zeigt ein Geräuschreduzierungssystem für Reifen mit auf der Feige angebrachten flexiblen, nicht selbsttragenden Klappen, aus vorzugsweise textilen Materialien, welche durch die Fliehkraft in radialer Richtung aufgestellt werden und das Reifeninnere in mehrere Kammern unterteilen. Auch hierdurch sollen Schwingungen im Reifeninneren gedämpft und eine Veränderung der Wellenlänge bzw. der Amplitude bei sich ausbildenden, stehenden Wellen der Luftsäule erreicht werden.

Nachteilig bei dieser Anordnung ist neben der mangelnden Wirkung auf die Schallschwingungen des den Reifen umgebenden Luftvolumens das insbesondere bei niedrigen Fahrgeschwindigkeiten noch nicht stabile Aufstellen der Klappen sowie die Möglichkeit eines 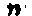 Flattems" bzw. einer Körperschwingung in Übergangsgeschwindigkeiten zwischen einer stabilen und einer instabilen Position.

Bekannt sind weiterhin schallabsorbierende Einbauten im Reifen, die auch die Dämpfung von Luftschall durch Absorption mit Hilfe von Resonatoren beinhalten. So offenbart etwa die DE 4400912 A1 in diesem Zusammenhang einen innerhalb des Reifens auf die Felge aufgezogenen Schlauch, der mit schalldämmendem Material, wie Schaumstoff, Schaumgummi oder Watte, gefüllt ist. Der Schlauch ist dabei gemäß einer Ausführung mit Löchern versehen, die sich ggf. im Füllmaterial fortsetzen und als Resonatorräume ausgebildet sind. Nachteilig neben der auch hier mangelnden Wirkung auf die Schallschwingungen des den Reifen umgebenden Luftvolumens ist bei dieser Lösung insbesondere die recht komplizierte Herstellung des gefüllten Schlauches und insbesondere der Resonatorräume.

Eine weitere Variante, die ebenfalls schallabsorbierende Einbauten im Reifen betrifft, offenbart die DE 19619859 A1. Dort sind unterhalb der Lauffläche und auf der Innenseite des Reifens angeordnete Koppelschwinger gezeigt, die in einer Ausführung auch mit Luftkammern und Drosselbohrungen versehen sind und demzufolge auch Resonatoreigenschaften beinhalten können. Der wesentliche Nachteil einer solchen Lösung besteht neben der komplizierten Herstellung und der auch hier mangelnden Wirkung auf die Schallachwingungen des den Reifen umgebenden Luftvolumens darin, daß bei den an einem schnellaufenden Reifen auftretenden enormen Zentrifugalkräften eine so starke Verformung bzw. Abplattung der Koppelschwinger und damit auch der Resonatorräume auftrtritt, daß deren Wirkung nahezu aufgehoben werden kann, da die ursprüngliche und auf die Schallabsorption ausgelegte geometrische Gestaltung völlig verändert wird.

Es zeigt sich also im Stand der Technik, daß weder die Profilgestaltung als solche noch Einbauten im Reifen oder im Radkasten in bezug auf die Schallabsorption Vorteile bereitstellen, die die einhergehenden Nachteile überwiegen könnten.

Es war daher Aufgabe der Erfindung, das Reifengeräusch in allen Fahrzuständen gleichermaßen zu dämpfen bzw. zu absorbieren ohne durch Einbauten ein weiteres stark schwingendes System zu schaffen und die Konstruktion von Reifenbauteil oder Karosserie ungünstig zu beeinflussen, sowie eine Reifenausbildung bereitzustellen, die es ermöglicht, eine auch über ein breites Frequenzspektrum wirksame Dämpfung oder Absorption von Luftschall durch Resonatoren zu erreichen, die weiterhin auf einfachste Weise und in beliebiger Form und Größe herzustellen ist, und die problemlos innerhalb bestehender Reifenkonstruktionen integriert werden kann, ohne die Fahreigenschaften oder die Handhabung des Reifens wesentlich zu verändern.

Gelöst wird diese Aufgabe durch die Merkmale des Hauptanspruchs. Vorteilhafte Weiterbildungen sind in den Unteransprüchen erfaßt.

Hierzu ist mindestens innerhalb von Teilbereichen des Reifenkörpers eine Vielzahl von als Resonatoren ausgebildeten Hohlräumen angeordnet, die mit einer Öffnung in der Oberfläche des Luftreifens in Verbindung stehen.

Durch die Anordnung solcher Hohlraum-Resonatoren innerhalb des Reifenkörpers, d. h. in aller Regel innerhalb des den Reifenkörper bildenden Gummimateriales und durch die Verbindung dieser Hohlräume mit jeweils einer Öffnung in der Oberfläche des Luftreifens, erreicht man eine Reifenkonstruktion, bei dem der Reifenkörper selbst als Schallabsorber wirkt, ohne daß zusätzliche Einbauten oder Formänderungen nötigt sind, die die Fahreigenschaften oder das Laufverhalten dieses sicherheitsrelevanten Bauteiles verändern könnten. Auf zusätzliche schallabsorbierende Auskleidungen im Radhaus bzw. im den Reifenkörper umgebenden Karosserieraum kann damit ebenso verzichtet werden wie auf Einbauten im Innenraum des Reifens, so daß sich der erfindungsgemäße Luftreifen im Hinblick auf Handhabung und Fahreigenschaften nicht wesentlich von den bisherigen Reifentypen unterscheidet. Hierbei kann der Resonatorhohlraum in beliebiger Form ausgebildet sein, also beispielsweise als halbkugel- oder kugelförmiger, als rechteckiger, zylindrischer oder pyramidenförmiger Hohlkörper.

Vorteilhafterweise sind die Hohlraum-Resonatoren als Helmholtz-Resonatoren ausgebildet und stehen über einen Kanal oder Mündungshals mit einer Öffnung in der äußeren Oberfläche des Luftreifens in Verbindung. Ein solcher an sich bekannter Helmholtz-Resonator weist einen Hohlraum mit angeschlossenem Kanal auf, deren Luftvolumina bei Eigenfrequenz zu Schwingungen anregbar sind. Die Anregung erfolgt über die Öffnung des Kanals, bzw. über den Mündungshals, über den der Hohlraum des Helmholtz-Resonators mit seiner Umgebung in Verbindung steht. Weisen die in der Umgebung entstehenden und auf die Öffnung des Helmholtz-Resonators einfallenden Schallwellen eine Frequenz auf, die mit der Eigenfrequenz des Helmholtz-Resonators übereinstimmt, so wird der Resonator durch die Schallwellen direkt angeregt. Eine Dämpfung der Schallwellen erfolgt dann durch Dissipation im Mündungshals / Mündungskanal des Resonators, wenn die Luft zwischen dem Umgebungsraum und dem Hohlraum des Resonators hin- und herschwingt.

Die geometrische Gestalt des Resonators und insbesondere die seiner Öffnung sind dabei bestimmend für die Eigenfrequenz des Resonators und damit für die Dämpfung bestimmter Frequenzbereiche der auf den Resonator einfallenden Schallwellen. Insofern läßt sich mit einer solchen Ausbildung auf besonders einfache Weise eine Einstellung der Dämpfungscharakteristik des Helmholtz-Resonators auf bestimmte Frequenzbereiche bzw. auf bestimmte störende Anteile aus einem speziellen Frequenzband durchführen.

Je nach der Wellenlänge der zu absorbierenden Schallwellen kann ein Hohlraum-Resonator auch als λ/4-Resonator oder als entsprechend anders angepaßter Hohlraum-Resonator ausgebildet werden.

In einer weiteren vorteilhaften Ausbildung sind die Hohlraum-Resonatoren im bzw. unterhalb des Laufstreifenprofil(s) angeordnet und stehen mit vorzugsweise in Profilrillen und/oder Profilausnehmungen befindlichen Öffnungen in der äußeren Oberfläche des Luftreifens in Verbindung.

Durch eine solche Ausbildung verhindert man, daß die Resonatoröffnungen im Bereich der Bodenaufstandsfläche des Luftreifens geschlossen werden, so daß auch hier - also in allernächster Nähe des Entstehungsortes - eine Absorption der durch das Auftreffen der Profilklötze auf die Fahrbahn erzeugten Schwingungen und Schallwellen stattfinden kann. Ebenfalls verringert man durch eine solche Ausbildung die Möglichkeit, daß die Öffnungen der Resonatoren durch Schmutzpartikel, durch Wasser oder Steine während des Abrollens verschlossen werden könnten.

In einer weiteren vorteilhaften Ausbildung sind die Hoblraum-Resonatoren (47) als unterer Teil einer durch gegenüberliegende Flanken (48,49) begrenzten Profilrille / Profilausnehmung (50) ausgebildet, wobei die gegenüberliegenden Flanken mit im wesentlichen parallel zur Außenoberfläche des Luftreifens sich erstreckenden Vorsprüngen (51,52) versehen sind, die unter Bildung einer einen Mündungskanal formenden schlitzförmigen Öffnung (53) zum unteren Teil in den Querschnitt der Profitrille / Profilausnehmung hineinragen.

Durch eine solche Ausbildung wird bei lediglich geringem zusätzlichen Aufwand gegenüber konventioneller Profilherstellung eine große Resonatorkapazität bereitgestellt, da der gesamte Rillengrund, bzw. der untere Rillenbereich zur Ausbildung eines Resonatorhohlraumes nutzbar wird.

Eine weitere vorteilhafte Ausbildung besteht darin, daß die zur Bildung einer schlitzförmigen Öffnung in den Querschnitt der Profilrille / Profilausnehmung hineinragenden Vorsprünge zur Formung eines Mündungskanales in ihrem Kopfbereich mit sich im wesentlichen senkrecht zur Außenoberfläche des Luftreifens erstreckenden Profilfortsätzen versehen sind.

Um nämlich die Absorption von tieferen Frequenzen, beispielweise von Frequenzen von etwa 1000 Hz, zu ermöglichen, ist es nötig, entweder das Volumen des Hohlraumes oder die Länge des Mündungshalses zu vergrößern. Beide Maßnahmen sind bei im bzw. unterhalb des Laufstreifenprofil(s) angeordneten Hohlraum-Resonatoren durch die geometrischen Verhältnisse am Reifen nur in begrenztem Umfang durchführbar. Durch die Ausbildung der genannten Profilfortsätze wird dieses Problem in verblüffend einfacher Weise gelöst, wobei sich die Profilfortsätze in Bezug auf den Hohlraum nach innen und / oder auch nach außen erstrecken können.

Eine in diesem Sinne ebenfalls vorteilhafte Ausbildung besteht darin, daß die Hohlraum-Resonatoren als unterer Teil einer durch gegenüberliegende Flanken begrenzten Profilrille / Profilausnehmung ausgebildet sind, wobei mindestens eine der Flanken mit einem sich im wesentlichen parallel zur Außenoberfläche des Luftreifens erstreckenden Vorsprung versehen ist, der in den Querschnitt der Profilrille / Profilausnehmung hineinragt und mindestens mit der gegenüberliegenden Flanke eine einen Mündungskanal formende schlitzförmige Öffnung zum unteren Teil ausbildet.

Auch hier kann der Mündungshals / Mündungskanal ohne wesentliche Beschränkung durch die Geometrie auf einfache Weise dadurch verlängert werden, daß der in den Querschnitt der Profilrille / Profilausnehmung hineinragende Vorsprung zur Formung eines Mündungskanales in seinem Kopfbereich mit einem sich parallel zur gegenüberliegenden Flanke und / oder zum Rillengrund erstreckenden Profilfortsatz versehen ist

Vorteilhafterweise sind dabei die sich im wesentlichen parallel zur Außenoberfläche des Luftreifens erstreckenden und ggf. mit Profilfortsätzen versehenen Vorsprünge mindestens über Teillängen einer Profilrille / Profilausnehmung ausgebildet, wodurch eine jeweils optimierte Konstruktion erreichbar wird im Hinblick auf den sich bei einer solchen Ausbildung gelegentlich ergebenden Zielkonflikt zwischen der Bereitstellung der durch die Profil- und Rillenausbildung beeinflußten Reifeneigenschaften, wie etwa gutes Nässe- und Aquaplaningverhalten, Wasserabfuhr, Traktion, etc., und dem Erfordernis, möglichst gute Schallabsorptionseigenschaften zu erreichen.

In einer weiteren vorteilhaften Ausbildung sind die sich im wesentlichen parallel zur Außenoberfläche des Luftreifens erstreckenden und ggf. mit Profilfortsätzen versehenen Vorsprünge im oberen Bereich der Profilrille / Profilausnehmung an oder in der Nähe der Außenoberfläche des Luftreifens ausgebildet. Insbesondere in Kombination mit einer Ausbildung der Hohlraum-Resonatoren in der vorstehend beschriebenen Weise über Teillängen einer Profilrille / Profilausnehmung läßt sich damit ein relativ großvolumiger, sehr wirkungsvoller und auf bestimmte Frequenzen gut anpassbarer Hohlraum-Resonator gestalten.

Vorteilhafterweise sind die als unterer Teil einer Profilrille / Profilausnehmung ausgebildeten Hohlraum-Resonatoren durch zwischen den gegenüberliegenden Flanken ausgebildete und im wesentlichen senkrecht zu letzteren und zur Außenoberfläche des Luftreifens sich erstreckende Trennstege in einzelne Hohlraumkammern aufgeteilt. Eine solche Aufteilung in einzelne Resonatorkammern - mit ggf. unterschiedlichen Volumina von benachbarten Kammern - erlaubt eine Schallabsorption in einem durch die Kammergeometrien ausgewählten Frequenzband und auch die statische Stabilisierung der Resonatorhohlräume bei während des Betriebes auftretenden Reifenverformungen.

In einer besonders vorteilhaften Ausbildung, die sich auch auf einfachste Weise in die Profilgestaltung und in die Vulkanisation einbinden läßt, sind die als Hohlraum-Resonatoren ausgebildeten Hohlräume als nach außen offene Negativprofile in der äußeren Oberfläche des Laufstreifens eingebracht und stehen mit einer Öffnung in den Flanken von Profilrillen oder -ausnehmungen des Laufstreifens in Verbindung.

Bei einer solchen Ausführung wird die Resonatorquerschnittsform, z. B. also der Querschnitt eines runden oder zylindrischen Resonator-Hohlraumes mit einem hieran angeschlossenen zylindrischen oder rechteckigen Mündungshals / Mündungskanal als Negativprofil oder Negativform in die äußere Oberfläche des Laufstreifens eingebracht. Dies geschieht in der Regel durch entsprechende Außenformen, die ein dem Negativprofil entsprechendes Positivprofil zur Formung beinhalten, beispielsweise durch die innere Oberfläche der Außenform einer Vulkanisationspresse.

Der Resonator 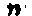 liegt" dann in der Laufstreifenoberfläche, und die Längsachse bzw. die Hochachse des gesamten aus Resonatorraum und Mündungshals bestehenden Hohlraum-Resonators befindet sich dann in einer Ebene etwas unterhalb und parallel zur Umfangsfläche des Laufstreifens. Somit stellt sich ein solcher Resonator dem Betrachter als geöffneter Profileinschnitt bzw. als Profilausnehmung dar. Der Mündungshals reicht dabei bis in die Flanken von benachbarten Profilrillen oder- ausnehmungen des Laufstreifens, so daß eine Verbindung des Negativprofils mit der Öffnung in den Flanken von Profilvertiefungen entsteht.

Tritt ein solches nach außen hin offenes Negativprofil beim Ablaufen in die Bodenaufstandsfläche ein, so wird durch den Boden bzw. den Straßenbelag das zur Profilaußenseite offene Negativprofil geschlossen, wodurch beim Durchlaufen der Bodenaufstandsfläche ein geschlossener Hohlraum-Resonator entsteht, der lediglich durch die Öffnung des Mündungshalses in der Flanke einer Profilrille mit der Oberfläche des Luftreifens in Verbindung steht. Somit kann direkt am Entstehungsort von Schallschwingungen die oben bereits geschilderte Resonator-Absorption bereitgestellt werden. Beim Auslaufen dieses Profilbereiches aus der Reifenaufstandsfläche ist dann die Resonatorfunktion wieder aufgehoben.

Eine solche Ausbildung der Hohlraum-Resonatoren ist ohne weiteres in die bestehende Profilfertigung einzugliedern und erfordert lediglich entsprechend ausgebildete Innenformen, beispielsweise in der Vulkanisationspresse.

Vorteilhafterweise sind die solcher Art als Negativprofile ausgebildeten Hohlraum-Resonatoren zur Außenseite des Laufstreifens hin verjüngt ausgebildet.

Durch eine solche Ausbildung, etwa ähnlich einer schwalbenschwanzförmigen Nut oder einer sich nach außen verjüngenden tropfenförmigen Kavität, wird es erreicht, daß in der Bodenaufstandsfläche, in der die Profilelemente einer starken Verformung und Quetschung unterworfen werden, der nach außen offene und als Negativprofil ausgebildete Hohlraum-Resonator nicht nur durch die gegebenenfalls unebene Straßen- oder Fahrbahnoberfläche verschlossen wird, sondern daß durch die dort wirkenden Verformungen die äußeren Randbereiche des Negativprofils komplett - und gegebenenfalls bereits kurz vor dem Eintreten in die Bodenaufstandsfläche - aneinandergedrückt und somit der Hohlkörper sicher und vollständig bis auf die Öffnung zur Flanke einer Profilrille geschlossen wird. Auch hier ist vor dem Einlaufen in die bzw. nach dem Auslaufen aus der Aufstandsfläche der als Negativprofil ausgebildete Hohlraum-Resonator geöffnet und in seiner Schallabsorptionswirkung gewissermaßen ausgeschaltet.

Man vermeidet durch eine solche Ausbildung der Hohlraum-Resonatoren als Negativprofile auch ein Entstehen von ungewollten Schwingungen durch tangential über die Öffnung der Resonatoren strömende Luft.

In einer weiteren vorteilhaften Ausbildung sind die Hohlraum-Resonatoren als Membran-Resonatoren ausgebildet, wobei deren Öffnung in der Oberfläche des Luftreifens durch eine Membran abgedeckt ist. Hierbei wird der äußere Luftschall über die Membran auf die Luftsäule im Hohlraum-Resonator geleitet, wodurch eine auf bestimmte Schwingungsfrequenzen optimierte Schallabsorption durch die Resonatoren erreicht werden kann.

In einer weiteren vorteilhaften Ausbildung sind die Hohlräume und / oder die Mündungshälse mit einem schallabsorbierenden Material versehen, vorzugsweise mit einem schallabsorbierendem Material ausgefüllt. Solche sogenannte 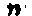 bedämpfte Resonatoren" erlauben eine Verstärkung der Absorption in einem etwas breiteren Frequenzbereich, wobei die Dissipation dann nicht nur aufgrund der geometrischen Grundlagen der Resonatoren erfolgt, sondern auch durch das eingebrachte Dämpfungsmaterial erhöht wird.

In einer weiteren vorteilhaften Ausbildung stehen die Hohlraum-Resonatoren über einen Mündungskanal- oder Mündungshals mit einer Öffnung in der inneren Oberfläche des Luftreifens in Verbindung. Dadurch wird es möglich, auch Schallschwingungen im Torusraum, d. h. in der inneren Luftsäule des Reifens zu absorbieren und somit deren Rückkopplung in die Reifenbauteile und die Abstrahlung nach außen zu verhindern. Solche Hohlräume lassen sich insbesondere in den Bereichen des Luftreifens ausbilden, in denen Verstärkungs- oder Gürtelelemente nicht störend in der Nähe der Innenoberfläche in Erscheinung treten, also beispielsweise im Schulterbereich von Reifen.

Vorteilhafterweise sind die Hohlraum-Resonatoren als Resonatoren für unterschiedliche Frequenzbereiche ausgebildet, so daß eine Anpassung auf besonders störende und stark auftretende Schallspitzen möglich wird. In einer besonders vorteilhaften Ausbildung sind die Hohlraum-Resonatoren als Helmholtz-Resonatoren ausgebildet, bei denen das Verhältnis von Mündungshals-Durchmesser zu Hohlraum-Durchmesser einen Wert kleiner als 1, vorzugsweise einen Wert im Bereich von 1/4 bis 1/8 aufweist.

Insbesondere bei tropfenförmigen Hohlräumen erreicht man durch eine solche Ausbildung im Verbund mit einer in ihrer Elastizität angepaßten Gummimischung einen besonders guten Kompromiß zwischen der geometrischen Anpassung der Hohlkörper auf die Absorption bestimmter Frequenzen und einer guten Formbarkeit der Hohlräume bzw. Entformbarkeit bei Herstellung der Hohlräume durch einen während der Vulkanisation eingebrachten Formkörper, der als zum Negativprofil des Hohlraumes komplementäres Positivprofil ausgebildet ist. Ein solcher Formkörper / ein solches Positivprofil kann beispielsweise in der Außenform einer Vulkanisationspresse angeordnet werden.

Bei einem solchen Herstellungverfahren besteht zur weiteren Erleichterung der Formbarkeit/Entformbarkeit eine besonders vorteilhafte Ausbildung darin, daß die Hohlraum-Resonatoren mit in der Oberfläche des Luftreifens angeordneten Mikro-Rillen - im Fachjargon oft als 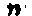 Lamellen" bezeichnet - in Verbindung stehen.

Durch eine solche Ausbildung wird ohne besondere Anpassung der Gummimischung auf den Formungs- / Entformungsvorgang eine durch die Lamellen bereitgestellte Elastizität bzw. Verformungsmöglichkeit in der Reifenoberfläche erzeugt, so daß beim Entformen eines als komplementäres Positivprofil eingebrachten Formkörpers die Mikro-Rillen (Lamellen) öffnen und ein Ausziehen des Positivprofils erlauben, während sie danach und insbesondere im Betriebszustand soweit geschlossen sind, daß die Funktionsfähigkeit des Resonators nicht beeinträchtigt wird.

Eine Minimierung des Einflusses der Mikro-Rillen auf die Funktionsfähigkeit des Resonators im Betriebszustand wird in vorteilhaften Weiterbildungen dadurch erreicht, daß entweder die im bzw. unterhalb des Laufstreifenprofil(s) angeordneten Hohlraum-Resonatoren im Bereich ihrer als Verbindung zur Oberfläche des Luftreifens vorgesehenen Öffnung oder im Bereich ihres Mündungshalses mit Mikro-Rillen (Lamellen) in Verbindung stehen, oder daß die als nach außen offene Negativprofile ausgebildeten Hohlraum-Resonatoren mit in das offene Negativprofil einmündenden Mikro-Rillen (Lamellen) in Verbindung stehen.

Bei einer solchen Ausbildung münden die nur zur Entformung und nicht besonders tief ausgebildeten Mikro-Rillen lediglich innerhalb oberflächennaher Bereiche in die Resonatoren, so daß eine Beeinflussung der Funktions- und Absorptionsfähigkeit nahezu ausgeschlossen wird.

Auch diese Ausbildungen erweisen sich als besonders geeignet und vorteilhaft bei tropfenförmigen Hohlräumen und bei Hohlräumen in Form einer sich nach außen verjüngenden tropfenförmigen Kavität, da die zur Herstellung solcher Hohlräume genutzten und als komplementäre Positivprofile ausgebildeten Formkörper entsprechend abgerundete und stetige Übergänge in ihrer räumlichen Ausbildung aufweisen, die im Zusammenwirken mit der duch die Mikro-Rillen bereitgestellte Elastizität bzw. Verformungsmöglichkeit in der Reifenoberfläche ein Überdehnen des umgebenden Gummi-Materiales beim Entformen verhindern.

Die Mikro-Rillen können zur Vereinfachung der Vulkanisationsformen, insbesondere der Positionierung und Fixierung der zu ihrer Herstellung nötigen dünnen Bleche, auch so ausgebildet sein, daß sie von einem Hohlraum-Resonator zum nächsten reichen, also durchgehend ausgebildet sind.

Ein vorteilhaftes Verfahren zur Herstellung eines erfindungsgemäßen Luftreifens, bei dem die Vielzahl von Hohlraum-Resonatoren im bzw. unterhalb des Laufstreifenprofil(s) angeordnet sind und mit vorzugsweise in Profilrillen und / oder Profilausnehmungen befindlichen Öffnungen in der äußeren Oberfläche des Luftreifens in Verbindung stehen, besteht darin, daß das Laufstreifenprofil in einem Runderneuerungsverfahren auf eine vorbereitete Altkarkasse aufgebracht wird

Dadurch lassen sich Luftreifen auch nachträglich mit schallabsorbierenden Eigenschaften versehen.

Ein vorteilhaftes Verfahren zur Herstellung eines erfindungsgemäßen Luftreifens als Neureifen, bei dem mindestens innerhalb von Teilbereichen des Reifenkörpers eine Vielzahl von Hohlraum-Resonatoren angeordnet ist, die mit einer Öffnung in der Oberfläche des Luftreifens in Verbindung stehen, besteht darin, daß der Luftreifen als Neureifen in zwei voneinander getrennten Verfahrensteilen A und B hergestellt wird, wobei im Verfahrensteil A ein im wesentlichen den Karkasskörper und gegebenenfalls Teile des Gürtelpaketes beinhaltender Teilreifen aufgebaut und anschließend in einer Vulkanisationsform ausvulkanisiert wird, die sowohl der Oberfläche als auch dem bzw. den Festigkeitsträger(n) eine vorbestimmte Querschnittskontur vermittelt, und wobei im Verfahrensteil B der Tellreifen durch Hinzufügen der gegebenenfalls noch fehlenden Teile des Gürtelpaketes, durch Hinzufügen des Laufstreifens und durch Hinzufügen der jeweils noch fehlenden Seitenwandgummiteile zu einem Komplettreifen aufgebaut wird, welcher ebenfalls einem Vulkanisationsvorgang unterzogen wird, wobei eine Vielzahl von Hohlraum-Resonatoren in dem im Verfahrensteil B aufgebrachten Laufstreifen bzw. unterhalb des Laufstreifenprofils angeordnet ist und die Hohlraum-Resonatoren über einen Mündungskanal oder Mündungshals mit in der äußeren Oberfläche des Luftreifens befindlichen Öffnungen in Verbindung stehen, und/oder wobei eine Vielzahl von Hohlraum-Resonatoren, die über einen Mündungskanal oder Mündungshals mit einer Öffnung in der inneren Oberfläche des Luftreifens in Verbindung stehen, vorhanden ist, wobei die mit der inneren Oberfläche des Luftreifens in Verbindung stehenden Hohlraum-Resonatoren in dem im Verfahrensteil A hergestellten Karkasskörper angeordnet sind.

Damit läßt sich ein stets in gleicher Form vorgefertigter Karkasskörper für die Herstellung einer ganzen Fertigungsreihe unterschiedlicher Fertigreifen mit schallabsorbierenden Eigenschaften nutzen, wobei gegebenenfalls der im Verfahrensteil A hergestellte Karkasskörper bereits Hohlraum-Resonatoren mit Öffnungen zum Reifeninnenraum / Torusraum beinhaltet und dann je nach gewünschter Ausführung des Fertigreifens im Verfahrensteil B unterschiedlich belegt werden kann. Dabei wird, abgesehen von konstruktiven und konfektionellen Anpassung der im Verfahrensteil B aufgebrachten Reifenteile, eine Vielzahl von Hohlraum-Resonatoren in dem im Verfahrensteil B aufgebrachten Laufstreifen bzw. unterhalb des Laufstreifenprofils angeordnet, die ebenfalls in ihren Absorptionseigenschaften je nach Bedarf angepaßt werden. Die Hohlraum-Resonatoren der in dem im Verfahrensteil B aufgebrachten Laufstreifen stehen dabei mit in der äußeren Oberfläche des Luftreifens befindlichen Öffnungen in Verbindung.

Mit einem solchen Herstellungsverfahren lassen sich auch - bei Verwendung gleicher vorgefertigter Karkasskörper - die Schallabsorptionseigenschaften des im Verfahrensteil B aufgelegten Laufstreifens so anpassen, daß ein ansonsten vergleichbarer Reifen auf die in bestimmten Ländern oder Gebieten hauptsächlich verwandten Straßenbeläge und die dadurch angeregten Reifenschwingungen ausgelegt wird.

Besonders vorteilhaft läßt sich der erfindungsgemäße Luftreifen, bei dem mindestens innerhalb von Teilbereichen des Reifenkörpers eine Vielzahl von Hohlraum-Resonatoren angeordnet ist, die mit einer Öffnung in der Oberfläche des Luftreifens in Verbindung stehen, als Reifen für die Antriebsachsen von Lastkraftwagen verwenden, da solche Reifen in überaus hohem Maße an der Schallemission beteiligt sind.

Anhand eines Ausführungsbeispieles soll der erfindungsgemäße Luftreifen näher dargestellt werden. Es zeigen:
- Fig. 1a: einen Abschnitt eines erfindungsgemäßen Luftreifens mit im Grundbereich von Profilrillen angeordneten Hohlraum-Resonatoren,
- Fig. 1b: eine vergrößerte Darstellung eines in Figur 1a gezeigten Hohlraum-Resonators,
- Fig. 2: einen Profilausschnitt mit einem als offenes Negativprofil ausgebildeten Hohlraum-Resonator,
- Fig. 3: einen Profilausschnitt mit einem als offenes Negativprofil ausgebildeten und zur Außenseite verjüngten Hohlraum-Resonator,
- Fig. 4: einen Teilquerschnitt des erfindungsgemäßen Luftreifens mit einem mit einer Öffnung zur Innenoberfläche des Luftreifens versehenen Hohlraum-Resonator,
- Fig. 5: einen Profiltellquerschnitt als Prinzipskizze zur Herstellung von Hohlraum-Resonatoren gemäß Fig. 1a,
- Fig. 6: einen Profiltellquerschnitt mit einem tropfenförmig ausgebildeten Hohlraum-Resonator, der im Bereich seines Mündungahalses mit Mikro-Rillen (Lamellen) in Verbindung steht,
- Fig. 7: einen Profilausschnitt mit einem als nach außen offenen Negativprofil ausgebildeten Hohlraum-Resonator in Form einer sich nach außen verjüngenden tropfenförmigen Kavität, der mit in das offene Negativprofil einmündenden Mikro-Rillen (Lamellen) in Verbindung steht,
- Fig. 8: eine Ansicht in Pfeilrichtung eines senkrechten Schnittes entlang der Linie VIII - VIII in der Fig. 7,
- Fig. 9: eine Ansicht in Pfeilrichtung eines waagerechten Schnittes entlang der Linie IX - IX in der Fig. 7,
- Fig.10: einen Profilteilquerschnitt mit einem Hohlraum-Resonator, der als unterer Teil einer durch gegenüberliegende Flanken begrenzten Profilrille / Profilausnehmung ausgebildet ist,
- Fig.11: einen vergrößerten Ausschnitt einer Profilansicht mit Hohlraum-Resonatoren, die in unterschiedlicher Weise als unterer Teil einer durch gegenüberliegende Flanken begrenzten Profilrille / Profilausnehmung ausgebildet sind,
- Fig. 12a: einen Schnitt entlang der Linie A - A in der Fig. 11
- Fig. 12b: einen Schnitt entlang der Linie B - B in der Fig. 11
- Fig. 13 a: einen Hohlraum-Resonator im Querschnitt, der als unterer Teil einer durch gegenüberliegende Flanken begrenzten Profilrille ausgebildet ist, mit in den Querschnitt der Profilrille hineinragenden Vorsprüngen, die zur Formung eines Mündungskanales mit Profilfortsätzen versehen sind,
- Fig. 13b: einen Hohlraum-Resonator im Querschnitt, der als unterer Teil einer durch gegenüberliegende Flanken begrenzten Profilrille ausgebildet ist, mit einem in den Querschnitt der Profilrille hineinragenden Vorsprung, der zur Formung eines Mündungskanales mit einem sich parallel zur gegenüberliegenden Flanke und zum Rillengrund erstreckenden Profilfortsatz versehen ist.

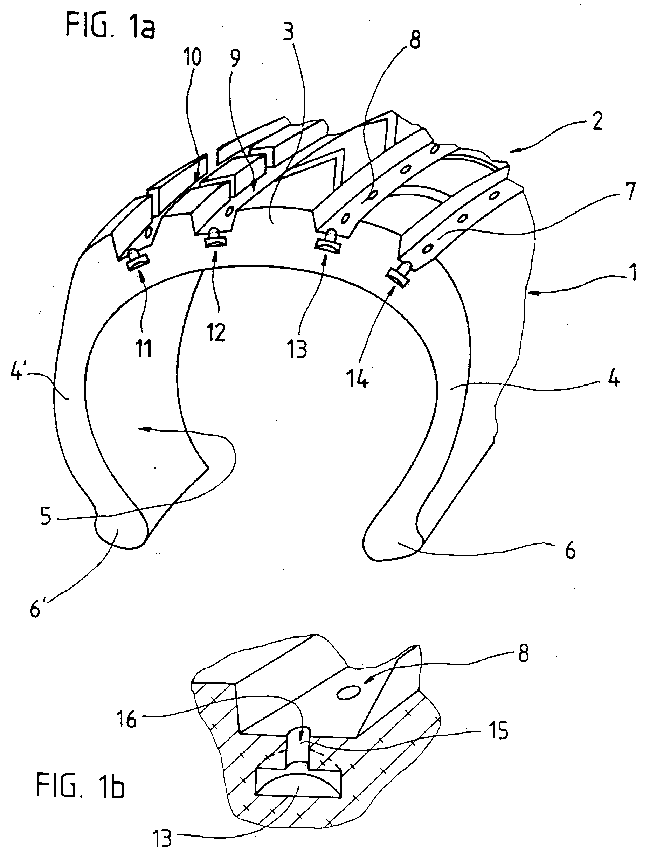

Die Figur 1a zeigt einen Abschnitt 1 eines erfindungsgemäßen Luftreifens, dessen Reifenkörper aus dem mit einem Laufstreifenprofil 2 versehenen Laufstreifen 3, aus zwei Seitenwänden 4 und 4', sowie aus mit einer aus Karkassenlagen und gegebenenfalls Verstärkungselementen versehenen Karkasse 5 besteht. Nicht näher dargestellt sind die eingelegten Gürtellagen, Gürtelbandagen und die Wulstkerne in den Reifenwülsten 6 und 6', die auf einer ebenfalls hier nicht näher dargestellten Feige aufliegen.

Im Grundbereich der Profilrillen 7, 8 , 9 und 10 sind jeweils eine Vielzahl von über den Reifenumfang verteilten Hohlraum-Resonatoren 11, 12, 13 und 14 vorgesehen, die jeweils über eine im Grundbereich der Profilrillen befindliche Öffnung mit der äußeren Oberfläche des Luftreifens in Verbindung stehen.

Die Figur 1b zeigt eine vergrößerte Darstellung des in der Figur 1a dargestellten Hohlraum-Resonators 13, der als Helmholtz-Resonator ausgebildet ist und über einen Mündungshals bzw. Mündungskanal 15 mit der Öffnung 16 im Grund der Profilrille 8 verbunden ist und somit mit der äußeren Oberfläche des Luftreifens in Verbindung steht.

Sowohl der Resonatorhohlraum 13 als auch der Mündungshals 15 sind hierbei als Hohlzylinder mit jeweils unterschiedlichen Durchmessern ausgebildet.

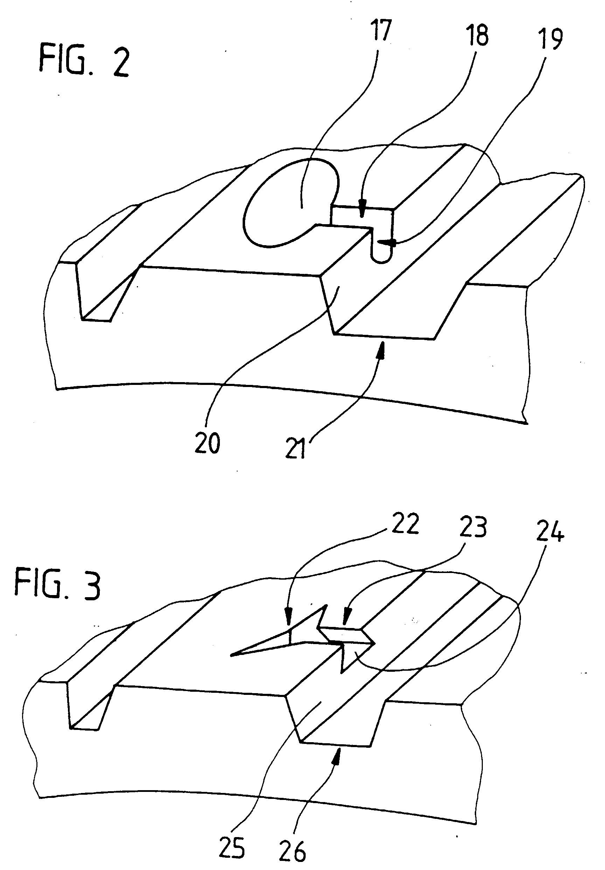

Die Figur 2 zeigt einen als offenes Negativprofil in der äußeren Oberfläche des Laufstreitens ausgebildeten Hohlraum-Resonator 17, der über einen Mündungshals 18 mit einer Öffnung 19 in der Flanke 20 einer Profilrille 21 des Laufstreifens in Verbindung steht.

Sobald dieser Laufstreifenbereich die Aufstandsfläche des Reifens durchläuft, wird der Hohlraum-Resonator durch den Kontakt zur Straßenoberfläche geschlossen, so daß nur noch die Öffnung 19 den Resonatorhohlraum mit der Oberfläche des Luftreifens verbindet, wodurch die Funktionsfähigkeit des Resonators während des Durchlaufens der Aufstandsfläche gewährleistet ist.

Die Figur 3 zeigt einen als offenes Negativprofil ausgebildeten und zur Außenseite des Luftreifens verjüngten Hohlraum-Resonator 22, der über einen ebenfalls verjüngt ausgebildeten Mündungshals 23 mit der Öffnung 24 in der Flanke 25 der Profilrille 26 in Verbindung steht.

Der Resonatorhohlraum und der Mündungshals mit ihrer hier in etwa sternförmigen Ausbildung werden beim Durchlaufen der Aufstandsfläche durch Verformungsvorgänge an der Oberfläche des Luftreifens nahezu geschlossen und erreichen dann ihre volle Funktionsfähigkeit. Hierdurch wird ein sicheres Schließen des Hohlraum-Resonators bis auf die Öffnung 24 erreicht, so daß Unebenheiten im Straßenbelag die Funktionsfähigkeit des Resonators in der Aufstandsfläche nicht mehr beeinträchtigen.

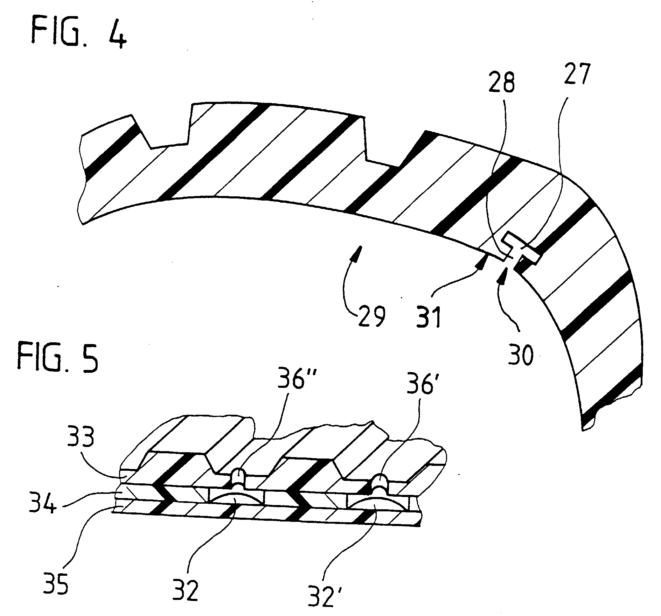

Die Figur 4 zeigt einen Teilquerschnitt eines Luftreifens mit einem Hohlraum-Resonator 27, der über einen Mündungshals bzw. Mündungskanal 28 mit der zur Innenseite 29 des Luftreifens gerichteten Öffnung 30 verbunden ist. Die Innenoberfläche des Luftreifens wird hierbei durch die aus Butyl-Kautschuk bestehende Innenseele 31 des Reifens gebildet.

Die Figur 5 zeigt eine Prinzipskizze zu einer möglichen Herstellungsart von Hohlraum-Resonatoren 32 und 32'. Deutlich erkennbar ist hier der im äußeren Bereich aus drei Gummischichten 33, 34 und 35 bestehende Aufbau des äußeren Laufstreifenbereiches, bei dem die Resonatorhohlräume durch zylindrische Ausnehmung in der mittleren Schicht 34 bereitgestellt werden, während die Mündungshälse bzw. Mündungskanäle 36 und 36' durch zylindrische Ausnehmungen bzw. Bohrungen im Rillengrund der oberen Schicht 33 entstehen. In der Vulkanisation ist dann eine homogene Verbindung zwischen all diesen Schichten geschaffen, so daß die Resonatorhohlräume und deren Mündungshälse im Vollmaterial bestehen bleiben.

Eine solche Herstellungsart eignet sich besonders bei der Verwendung von separaten Laufstreifen zur Herstellung von Luftreifen, also beispielsweise bei der bereits genannten Herstellung der Luftreifen als Neureifen in zwei voneinander getrennten Verfahrensteilen A und B oder auch bei der Neubelegung von Altkarkassen im Rahmen einer Runderneuerung.

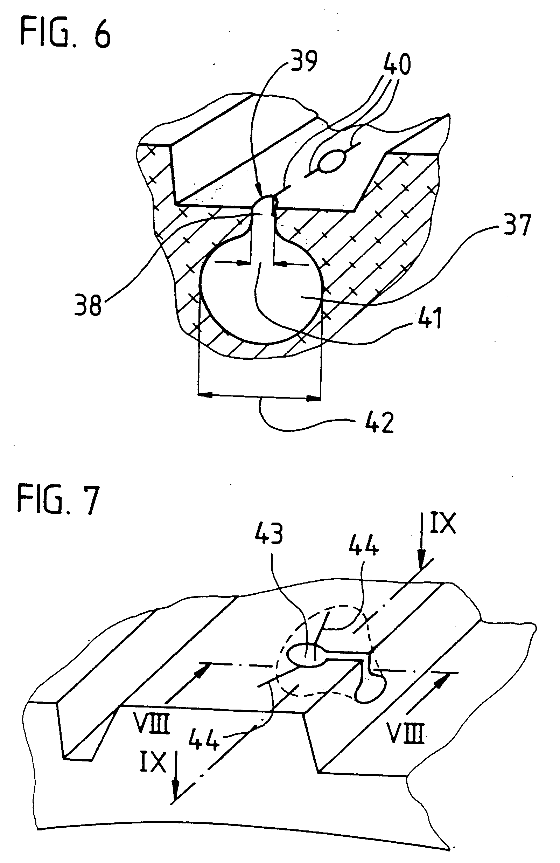

Die Fig. 6 zeigt einen Profilteilquerschnitt mit einem tropfenförmig ausgebildeten Hohlraum-Resonator 37, der über seinen Mündungshals bzw. Mündungskanal 38 mit der Offnung 39 und damit mit der äußeren Reifenoberfläche in Verbindung steht. Die Herstellung eines solchen Hohlraum-Resonators erfolgt durch einen während der Vulkanisation als komplementäres Positivprofil eingebrachten Formkörper. Im Bereich seines Mündungshalses bzw. Mündungskanales 38 steht der Resonatorhohlraum 37 mit Mikro-Rillen 40 in Verbindung, die nur zur Entformung dienen und nicht besonders tief sind und lediglich innerhalb oberflächennaher Bereiche in den Mündungshals einmünden.

Das Verhältnis von Mündungshals-Durchmesser 41 zu Hohlraum-Durchmesser 42 weist hier einen Wert von 1/7 auf, wodurch eine geometrische Ausbildung zur verstärkten Schallabsorption etwa im Bereich von 2000 Hz erreicht wird.

Die Fig. 7 zeigt einen Profilausschnitt mit einem als nach außen offenen Negativprofil ausgebildeten Hohlraum-Resonator 43 in Form einer sich nach außen verjüngenden tropfenförmigen Kavität, der mit in das offene Negativprofil einmündenden Mikro-Rillen 44 in Verbindung steht.

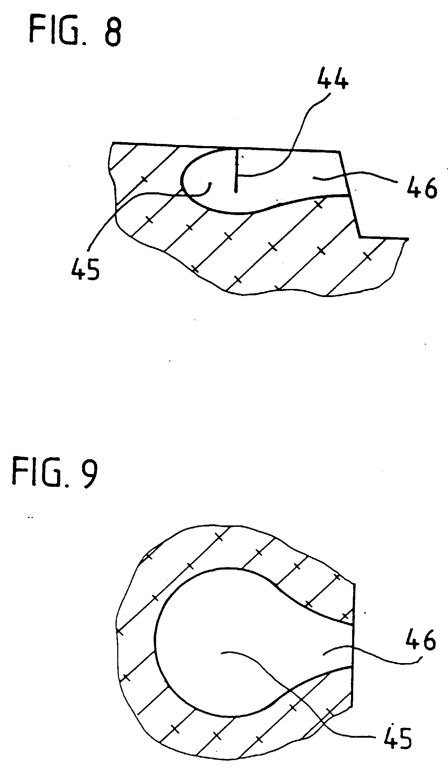

Die Fig. 8 zeigt eine Ansicht in Pfeilrichtung eines senkrechten Schnittes entlang der Linie VIII - VIII in der Fig. 7, bei der die sich nach außen verjüngenden tropfenförmigen Kavität 45 deutlich erkennbar wird, die in den Mündungshals 46 übergeht. Ebenfalls erkennbar ist eine im oberflächennahen Bereich einmündende Mikro-Rille 44.

Die Fig. 9 zeigt eine Ansicht in Pfeilrichtung eines waagerechten Schnittes entlang der Linie IX - IX in der Fig. 7, bei der ebnfalls die sich nach außen verjüngenden tropfenförmigen Kavität 45 und der Mündungshals 46 deutlich dargestellt sind.

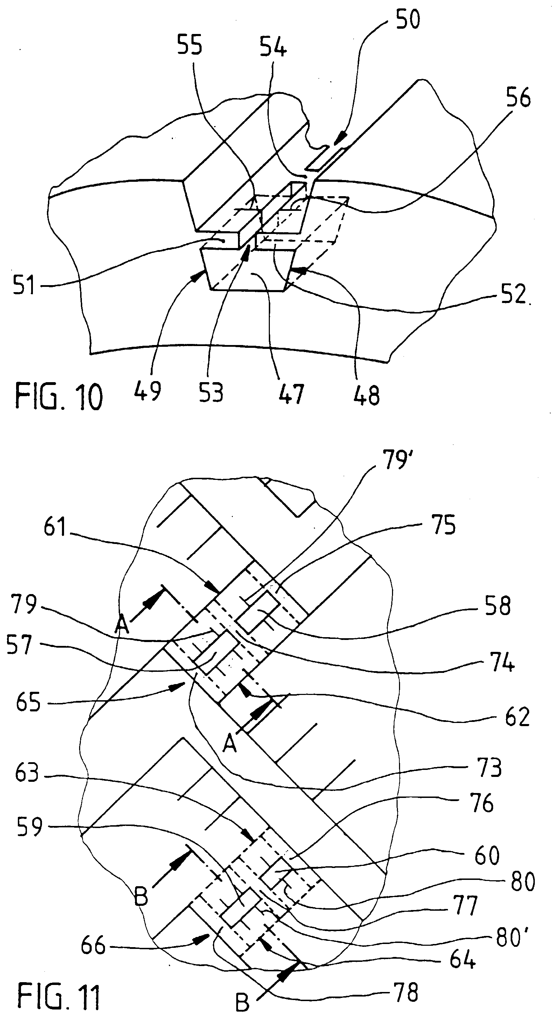

Die Fig. 10 zeigt einen Profilteilquerschnitt mit einem Hohlraum-Resonator 47, der als unterer Teil einer durch gegenüberliegende Flanken 48 und 49 begrenzten Profilrille / Profilausnehmung 50 ausgebildet ist.

Die gegenüberliegenden Flanken sind dabei mit im wesentlichen parallel zur Außenoberfläche des Luftreifens sich erstreckenden Vorsprüngen 51 und 52 versehen, die unter Bildung einer schlitzförmige Öffnung 53 zum unteren Teil in den Querschnitt der Profilrille / Profilausnehmung hineinragen

Hierbei sind die als unterer Teil einer Profilrille / Profilausnehmung ausgebildeten Hohlräume 47 durch zwischen den gegenüberliegenden Flanken 48 und 49 ausgebildeten und im wesentlichen senkrecht zu letzteren und zur Außenoberfläche des Luftreifens sich erstreckende Trennstege 54 in einzelne Hohlraumkammern aufgeteilt.

Die Vorsprünge 51 und 52 weisen Mikro-Rillen (Lamellen) 55 und 56 auf, die nur zur Entformung dienen und in die zwischen den Vorsprüngen verbleibende Öffnung einmünden.

Die Fig. 11 zeigt einen vergrößerten Ausschnitt einer Profilansicht mit Hohlraum-Resonatoren 57, 58, 59 und 60, die in unterschiedlicher Weise als unterer Teil der durch gegenüberliegende Flanken 61, 62, 63 und 64 begrenzten Profilrillen / Profilausnehmungen 65 und 66 ausgebildet sind.

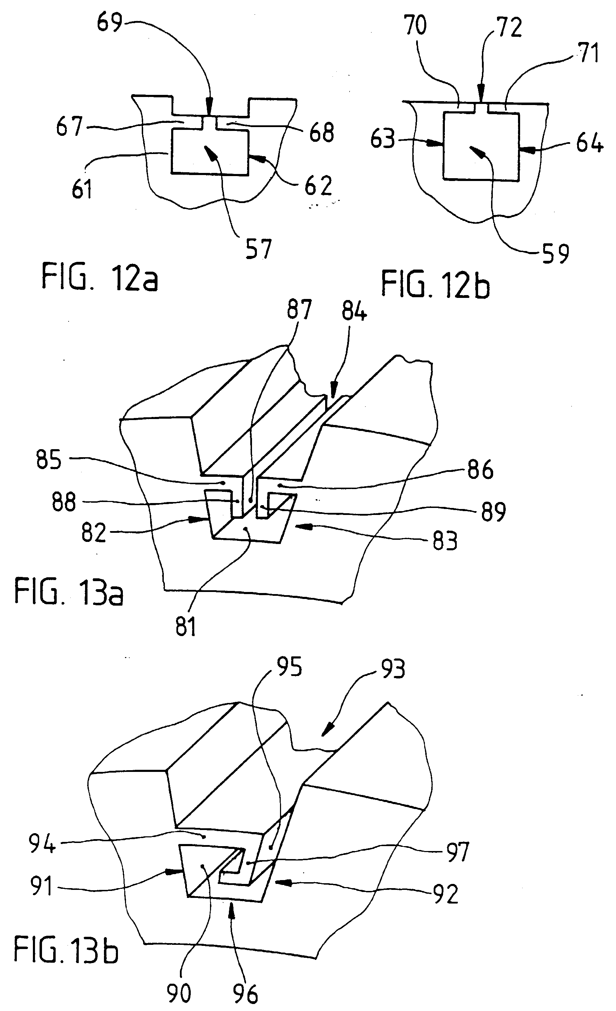

Die Fig. 12a zeigt hierzu einen Schnitt entlang der Linie A - A in der Fig. 11, die Fig. 12b zeigt einen Schnitt entlang der dortigen Linie B - B.

In der Zusammenschau erkennt man die unterschiedlichen Ausbildungen der Hohlraum-Resonatoren, wobei der Hohlraum-Resonator 57 durch im wesentlichen parallel zur Außenoberfläche des Luftreifens sich erstreckende Vorsprüngen 67 und 68 unter Bildung einer schlitzförmigen Öffnung 69 abgeschlossen wird. Die Vorsprünge 67 und 68 sind dabei - vom Rillengrund ausgehend - etwa in einer Höhe von 70 % der Rillentiefe angeordnet, sodaß oberhalb der Vorspünge noch eine Resttiefe der Rille zur Bereitstellung der durch die Profil- und Rillenausbildung beeinflußten Reifeneigenschaften, wie etwa Wasserabfuhr und Traktion, etc. zur Verfügung steht.

Der Hohlraum-Resonator 59 wird demgegenüber durch im wesentlichen im Bereich der Außenoberfläche des Luftreifens angeordnete Vorsprünge 70 und 71 unter Bildung einer schlitzförmigen Öffnung 72 abgeschlossen. In einer solchen Ausführung übernehmen die umgebenden und nicht mit Hohlraum-Resonatoren versehenen Profilrillen die Bereitstellung der o.g. Reifeneigenschaften, während der gezeigte Rilleribereich auf eine maximale Schallabsorptionsfähigkeit mit vergrößerten Resonatorräumen ausgelegt ist, sodaß es innerhalb von Längenbereichen einer Profilrille zu einer Funktionsteilung kommt, ohne die Herstellbarkeit des Gesamtgebildes wesentlich zu erschweren.

Deutlich erkennbar sind in der Zusammenschau der Fig. 11, 12a und 12b auch die Trennstege 73, 74 und 75 sowie 76, 77 und 78, durch die Hohlraumkammern unterschiedlicher Länge begrenzt werden, wodurch eine Anpassung auf die Absorption von Schall unterschiedlicher Frequenzbereiche möglich wird.

Auch hier weisen die Vorsprünge 67 und 68, sowie 70 und 71 eine Anzahl von Mikro-Rillen (Lamellen) auf, in den Fig. lediglich exemplarisch mit den Bezugsziffern 79 und 79' sowie 80 und 80' angedeutet, die nur zur Entformung dienen und in die zwischen den Vorsprüngen verbleibende Öffnung einmünden.

Die Fig.13a zeigt einen Hohlraum-Resonator 81 im Querschnitt, der als unterer Teil einer durch gegenüberliegende Flanken 82 und 83 begrenzten Profilrille 84 ausgebildet ist, wobei die Flanken in den Querschnitt der Profilrille hineinragende Vorsprünge 85 und 86 aufweisen, die zur Formung eines Mündungskanales 87 mit Profilfortsätzen 88 und 89 versehen sind. Dadurch ist zur Absorption von tieferen Frequenzen, beispielweise von Frequenzen von etwa 1000 Hz, die Länge des Mündungshalses / Mündungskanales vergrößert worden, ohne den erforderlichen Einbauraum für den Hohlraum-Resonator zu vergrößern.

In gleicher Weise und unter Bereitstellung eines noch weiter verlängerten Mündungskanales gelingt dies mit der in der Fig. 13b gezeigten Ausführung, bei der ein Hohlraum-Resonator 90 als unterer Teil einer durch gegenüberliegende Flanken 91 und 92 begrenzten Profilrille 93 ausgebildet ist, wobei eine Flanke 91 einen in den Querschnitt der Profilrille hineinragenden Vorsprung 94 aufweist, der zur Formung eines Mündungskanales 95 mit einem sich parallel zur gegenüberliegenden Flanke 92 und zum Rillengrund 96 erstreckenden Profilfortsatz 97 versehen ist.

### Bezugszeichenliste

- 1: Abschnitt eines Luftreifens
- 2: Laufstreifenprofil
- 3: Laufstreifen
- 4, 4': Seitenwand
- 5: Karkasse
- 6, 6': Reifenwulst
- 7 - 10: Profilrille
- 11 - 14: Hohlraum-Resonator
- 15: Mündungskanal / Mündungshals
- 16: Öffnung
- 17: Hohlraum-Resonator in Form eines -Negativprofils
- 18: Mündungskanal / Mündungshals
- 19: Öffnung
- 20: Flanke der Profilrille
- 21: Profilrille
- 22: Hohlraum-Resonator in Form eines Negativprofils
- 23: Mündungskanal / Mündungshals
- 24: Öffnung
- 25: Flanke der Profilrille
- 26: Profilrille
- 27: Hohlraum-Resonator
- 28: Mündungskanal / Mündungshals
- 29: Innenoberfläche des Reifens
- 30: Öffnung
- 31: Innenseele
- 32, 32': Hohlraum-Resonator
- 33 - 35: Gummischicht
- 36, 36': Mündungskanal / Mündungshals
- 37: Hohlraum-Resonator
- 38: Mündungskanal / Mündungshals
- 39: Öffnung
- 40: Mikro-Rille (Lamelle)
- 41: Mündunghalsdurchmesser
- 42: Hohlraumdurchmesser
- 43: Hohlraum-Resonator
- 44: Mikro-Rille (Lamelle)
- 45: tropfenförmige Kavität
- 46: Mündungskanal / Mündungshals
- 47: Hohlraum-Resonator
- 48, 49: Flanke einer Profilrille
- 50: Profilrille
- 51, 52: Vorsprung
- 53: Öffnung
- 54: Trennsteg
- 55, 56: Mikro-Rille (Lamelle)
- 57 - 60: Hohlraum-Resonator
- 61 - 64: Flanke einer Profilrille
- 65, 66: Profilrille
- 67, 68: Vorsprung
- 69: Öffnung
- 70, 71: Vorsprung
- 72: Öffnung
- 73 - 78: Trennsteg
- 79, 79': Mikro-Rille (Lamelle)
- 80, 80': Mikro-Rille (Lamelle)
- 81: Hohlraum-Resonator
- 82, 83: Flanke einer Profilrille
- 84: Profilrille
- 85, 86: Vorsprung
- 87: Mündungskanal / Mündungshals
- 88, 89: Profilfortsatz
- 90: Hohlraum-Resonator
- 91, 92: Flanke einer Profilrille
- 93: Profilrille
- 94: Vorsprung
- 95: Mündungskanal / Mündungshals
- 96: Rillengrund
- 97: Profilfortsatz

## Patentansprüche

1. Luftreifen für ein Fahrzeug, wobei der Reifenkörper im wesentlichen aus zwei Seitenwänden, einer mit Karkassenlagen und ggf. mit Verstärkungselementen versehenen Karkasse, einem aus Gürtellagen und ggf. einer ein- oder mehrteiligen Gürtelbandage, einem mit einem Laufstreifenprofil versehenen Laufstreifen und weiteren Einlagen bestehenden Gürtelpaket, sowie aus zwei mit Wulstkernen versehenen Reifenwülsten besteht,
**dadurch gekennzeichnet,**
daß mindestens innerhalb von Teilbereichen des Reifenkörpers eine Vielzahl von Hohlraum-Resonatoren angeordnet ist, die mit Öffnungen in der Oberfläche des Luftreifens in Verbindung stehen.

2. Luftreifen nach Anspruch 1, dadurch gekennzeichnet, daß die Hohlraum-Resonatoren (11 - 14) als Helmholtz-Resonatoren ausgebildet sind und über einen Mündungskanal oder Mündungshals (15) mit einer Öffnung (16) in der äußeren Oberfläche des Luftreifens in Verbindung stehen.

3. Luftreifen nach Anspruch 1 oder 2, dadurch gekennzeichnet, daß die Hohlraum-Resonatoren im bzw. unterhalb des Laufstreifenprofil(s) angeordnet sind und mit vorzugsweise in Profilrillen und/ oder Profilausnehmungen befindlichen Öffnungen in der äußeren Oberfläche des Luftreifens in Verbindung stehen.

4. Luftreifen nach Anspruch 1 bis 3, dadurch gekennzeichnet, daß die Hohlraum-Resonatoren (47) als unterer Teil einer durch gegenüberliegende Flanken (48,49) begrenzten Profilrille / Profilausnehmung (50) ausgebildet sind, wobei die gegenüberliegenden Flanken mit im wesentlichen parallel zur Außenoberfläche des Luftreifens sich erstreckenden Vorsprüngen (51,52) versehen sind, die unter Bildung einer einen Mündungskanal formenden schlitzförmigen Öffnung (53) zum unteren Teil in den Querschnitt der Profilrille / Profilausnehmung hineinragen.

5. Luftreifen nach Anspruch 4, dadurch gekennzeichnet, daß die zur Bildung einer schlitzförmigen Öffnung in den Querschnitt der Profilrille / Profilausnehmung hineinragenden Vorsprünge (85,86) zur Formung eines Mündungakanales (87) in ihrem Kopfbereich mit sich im wesentlichen senkrecht zur Außenoberfläche des Luftreifens erstreckenden Profilfortsätzen (88,89) versehen sind.

6. Luftreifen nach Anspruch 1 bis 3, dadurch gekennzeichnet, daß die Hohlraum-Resonatoren (90) als unterer Teil einer durch gegenüberliegende Flanken (91,92) begrenzten Profilrille / Profilausnehmung (93) ausgebildet sind, wobei mindestens eine der Flanken mit einem sich im wesentlichen parallel zur Außenoberfläche des Luftreifens erstreckenden Vorsprung (94) versehen ist, der in den Querschnitt der Profilrille / Profilausnehmung hineinragt und mindestens mit der gegenüberliegenden Flanke eine einen Mündungskanal formende schlitzförmige Öffnung zum unteren Teil ausbildet.

7. Luftreifen nach Anspruch 6, dadurch gekennzeichnet, daß der in den Querschnitt der Profilrille / Profilausnehmung hineinragende Vorsprung (94) zur Formung eines Mündungskanales (95) in seinem Kopfbereich mit einem sich parallel zur gegenüberliegenden Flanke und / oder zum Rillengrund erstreckenden Profilfortsatz (97) versehen ist.

8. Luftreifen nach Anspruch 4 bis 7, dadurch gekennzeichnet, daß die sich im wesentlichen parallel zur Außenoberfläche des Luftreifens erstreckenden und ggf. mit Profilfortsätzen versehenen Vorsprünge mindestens über Teillängen einer Profilrille / Profilausnehmung ausgebildet sind.

9. Luftreifen nach Anspruch 8, dadurch gekennzeichnet, daß die sich im wesentlichen parallel zur Außenoberfläche des Luftreifens erstreckenden und ggf. mit Profilfortsätzen versehenen Vorsprünge im oberen Bereich der Profilrille / Profilausnehmung an oder in der Nähe der Außenoberfläche des Luftreifens ausgebildet sind.

10. Luftreifen nach Anspruch 4 bis 9, dadurch gekennzeichnet, daß die als unterer Teil einer Profilrille / Profilausnehmung ausgebildeten Hohlraum-Resonatoren durch zwischen den gegenüberliegenden Flanken ausgebildete und im wesentlichen senkrecht zu letzteren und zur Außenoberfläche des Luftreifens sich erstreckende Trennatege (54) in einzelne Hohlraumkammern aufgeteilt sind.

11. Luftreifen nach Anspruch 1 oder 2, dadurch gekennzeichnet, daß die Hohlraum-Resonatoren als nach außen offene Negativprofile (17) in der äußeren Oberfläche des Laufstreifens eingebracht sind und mit einer Öffnung (19) in den Flanken (20) von Profilrillen oder -ausnehmungen (21) des Laufstreifens in Verbindung stehen.

12. Luftreifen nach Anspruch 11, dadurch gekennzeichnet, daß die Hohlraum-Resonatoren zur Außenseite des Laufstreifens verjüngt ausgebildet sind.

13. Luftreifen nach einem oder mehreren der vorhergehenden Ansprüche, dadurch gekennzeichnet, daß die Hohlraum-Resonatoren als Membran-Resonatoren ausgebildet sind, wobei deren Öffnung in der Oberfläche des Luftreifens durch eine Membran abgedeckt ist.

14. Luftreifen nach Anspruch 1 bis 13, dadurch gekennzeichnet, daß die Hohlräume und / oder die Mündungskanäle mit einem schallabsorbierenden Material versehen, vorzugsweise ausgefüllt sind.

15. Luftreifen nach einem Anspruch 1, 2, 13 oder 14, dadurch gekennzeichnet, daß die Hohlraum-Resonatoren (27) über einen Mündungskanal bzw. Mündungshals (28) mit einer Öffnung (30) in der inneren Oberfläche (29) des Luftreifens in Verbindung stehen.

16. Luftreifen nach einem oder mehreren der vorhergehenden Ansprüche, dadurch gekennzeichnet, daß die Hohlraum-Resonatoren für unterschiedliche Frequenzbereiche ausgebildet sind.

17. Luftreifen nach einem oder mehreren der vorhergehenden Ansprüche, dadurch gekennzeichnet, daß die Hohlraum-Resonatoren als Helmholtz-Resonatoren ausgebildet sind, bei denen das Verhältnis von Mündungskanal-Durchmesser (41) zu Hohlraum-Durchmesser (42) einen Wert kleiner als 1, vorzugsweise einen Wert im Bereich von 1/4 bis 1/8 aufweist.

18. Luftreifen nach Anspruch 1 bis 17, dadurch gekennzeichnet, daß die Hohlraum-Resonatoren mit in der Oberfläche des Luftreifens angeordneten Mikro-Rillen (40, 44) in Verbindung stehen.

19. Luftreifen nach Anspruch 18, dadurch gekennzeichnet, daß die im bzw. unterhalb des Laufstreifenprofil(s) angeordneten Hohlraum-Resonatoren im Bereich ihrer als Verbindung zur Oberfläche des Luftreifens vorgesehenen Öffnung oder im Bereich ihres Mündungskanals mit Mikro-Rillen (40) in Verbindung stehen.

20. Luftreifen nach Anspruch 18, dadurch gekennzeichnet, daß die als nach außen offene Negativprofile ausgebildeten Hohlraum-Resonatoren mit in das offene Negativprofil einmündenden Mikro-Rillen (44) in Verbindung stehen.

21. Luftreifen nach Anspruch 18, dadurch gekennzeichnet, daß die als unterer Teil einer durch gegenüberliegende Flanken begrenzten Profilrille / Profilausnehmung ausgebilden Hohlraum-Resonatoren mit in den parallel zur Außenoberfläche des Luftreifens sich erstreckenden Vorsprüngen vorgesehenen Mikro-Rillen (55,56) in Verbindung stehen.

22. Verfahren zur Herstellung eines Luftreifen nach einem oder mehreren der Ansprüche 1 bis 21, bei dem die Vielzahl von Hohlraum-Resonatoren im bzw. unterhalb des Laufstreifenprofil(s) angeordnet sind und mit vorzugsweise in Profilrillen und / oder Profilausnehmungen befindlichen Öffnungen in der äußeren Oberfläche des Luftreifens in Verbindung stehen, dadurch gekennzeichnet, daß das mit Hohlraum-Resonatoren versehene Laufstreifenprofil in einem Auflegeverfahren, vorzugsweise in einem Runderneuerungsverfahren auf eine vorbereitete Karkasse aufgebracht wird.

23. Verfahren zur Herstellung eines Luftreifens nach einem oder mehreren der Ansprüche 1 bis 21, bei dem mindestens innerhalb von Teilbereichen des Reifenkörpers eine Vielzahl von Hohlraum-Resonatorenangeordnet ist, die mit einer Öffnung in der Oberfläche des Luftreifens in Verbindung stehen, dadurch gekennzeichnet, daß der Luftreifen als Neureifen in zwei voneinander getrennten Verfahrensteilen A und B hergestellt wird, wobei im Verfahrensteil A ein im wesentlichen den Karkasskörper und gegebenenfalls Teile des Gürtelpaketes beinhaltender Teilreifen aufgebaut und anschließend in einer Vulkanisationsform ausvulkanisiert wird, die sowohl der Oberfläche als auch dem bzw. den Festigkeitsträger(n) eine vorbestimmte Querschnittskontur vermittelt, und wobei im Verfahrensteil B der Teilreifen durch Hinzufügen der gegebenenfalls noch fehlenden Teile des Gürtelpaketes, durch Hinzufügen des Laufstreifens und durch Hinzufügen der jeweils noch fehlenden Seitenwandgummiteile zu einem Komplettreifen aufgebaut wird, welcher ebenfalls einem Vulkanisationsvorgang unterzogen wird, wobei eine Vielzahl von Hohlraum-Resonatoren in dem im Verfahrensteil B aufgebrachten Laufstreifen bzw. unterhalb des Laufstreifenprofils angeordnet ist und die Hohlraum-Resonatoren über einen Mündungskanal oder Mündungshals mit in der äußeren Oberfläche des Luftreifens befindlichen Öffnungen in Verbindung stehen, und / oder wobei eine Vielzahl von Hohlraum-Resonatoren, die über einen Mündungskanal oder Mündungshals mit einer Öffnung in der inneren Oberfläche des Luftreifens in Verbindung stehen, vorhanden ist, wobei die mit der inneren Oberfläche des Luftreifens in Verbindung stehenden Hohlraum-Resonatoren in dem im Verfahrensteil A hergestellten Karkasskörper angeordnet sind.

24. Verwendung eines Luftreifens nach Anspruch 1 bis 23, bei dem mindestens innerhalb von Teilbereichen des Reifenkörpers eine Vielzahl von Hohlraum-Resonatoren angeordnet ist, die über einen Mündungskanal oder Mündungshals mit einer Öffnung in der Oberfläche des Luftreifens in Verbindung stehen, als Reifen für die Antriebsachsen von Lastkraftwagen.
